# EUROPÄISCHE PATENTSCHRIFT

(11) **EP 1 021 313 B1**
(45) Veröffentlichungstag und Bekanntmachung des Hinweises auf die Patenterteilung: **03.04.2002**
(21) Anmeldenummer: 98955347.4
(22) Anmeldetag: 21.09.1998
(51) Int. Cl.: B60R 16/00

(54) **ELEKTRISCHER HEBELSCHALTER**
ELECTRIC LEVER SWITCH
COMMUTATEUR BASCULANT ELECTRIQUE

(30) Priorität: 06.10.1997 DE 19744088
(43) Veröffentlichungstag der Anmeldung: 26.07.2000
(73) Patentinhaber: Delphi Technologies, Inc., Troy, MI 48084 (US)
(72) Erfinder: WEISS, Hans-Günter, D-67550 Worms (DE); LENG, Peter, D-65428 Rüsselsheim (DE)
(74) Vertreter: Becker, Bernd, Dipl.-Ing.
(86) Internationale Anmeldenummer: DE9802861
(87) Internationale Veröffentlichungsnummer: WO9917960

(56) Entgegenhaltungen:
- DE-A- 19 607 668
- US-A- 4 293 743
- US-A- 4 748 298
- US-A- 5 581 058
- US-A- 5 661 276

## Beschreibung

Die Erfindung bezieht sich auf einen elektrischen Hebelschalter, insbesondere für ein Kraftfahrzeug, mit einem an dessen Hebel angeordneten Betätigungsknopf.

Aus der DE 30 39 832 A1 ist eine gattungsgemässe elektrische Kombinations-Schalteinrichtung bekannt, in der zwei Hebelschalter und ein Kipptastenschalter zusammengefaßt sind. Jeder Hebelschalter weist einen in einem Gehäuse gelagerten Hebel und einen am Hebel vorhandenen Betätigungsknopf auf. Die Befestigung des Hebelschalters erfolgt mittels Schrauben über entsprechende Schraublöcher im Gehäuse, in dem Schaltfunktionsteile untergebracht sind. Im Innern des hohl ausgeführten Hebels verläuft eine Schaltwelle, die bei Betätigung auf die Schaltfunktionsteile einwirkt. Diese Ausgestaltung bewirkt eine Schwächung des Hebels, da die Schaltwelle keine Biegekräfte abfangen darf, was zu einem Verbiegen der Schaltwelle führen würde. Kommt es aufgrund hoher Beanspruchung zu einem Verbiegen und damit zu einem Verklemmen der Schaltwelle, so ist ein sicheres Schalten nicht mehr gewährleistet. Für die Schaltfunktionsteile wird kein sicheres Schalten erreicht, da die Kontakte nicht mehr zuverlässig beaufschlagt werden. Der Hebel ist verhältnismäßig lang und im Umfang an seinem freien Ende kräftig ausgeführt, um beim Schalten gut in der Hand zu liegen. In Folge des Hebelausschlages müssen die Schaltfunktionsteile im Gehäuse um einen entsprechenden Winkelausschlag mitgehen, wodurch ein verhältnismäßig großes Gehäuse erforderlich ist. Bedingt durch den Anbau von immer komplexeren Systemen, die mehr Raum benötigen, ist für ein entpsrechend großes Gehäuse kein Platz mehr vorhanden. Sehr kritisch ist dies im Bereich des Lenkrades, da durch ein großes Airbagmodul der Raum für dem Lenkrad zuzuordnende Schalter relativ gering ist.

Der Erfindung liegt die Aufgabe zugrunde, eine kostengünstigen Hebelschalter der eingangs genannten Art zu schaffen, durch den ein einfacher Anbau bei beengten Platzverhältnissen und ohne Funktionseinschränkungen ermöglicht wird.

Diese Aufgabe wird erfindungsgemäß dadurch gelöst, daß der Hebel an seinem einen Ende mit Befestigungselementen versehen und an seinem anderen Ende gelenkig mit dem sämtliche Schaltfunktionsteile aufnehmenden Betätigungsknopf verbunden ist.

Durch diese Maßnahmen benötigt der Hebelschalter für seine Befestigung nur einen geringen Platzbedarf. Da alle Schaltfunktionsteile, sowohl die mechanischen als auch die elektrischen, kompakt im Betätigungsknopf untergebracht sind, ergibt sich eine optimale Ausnutzung des durch den Betätigungsknopf zur Verfügung gestellten Raumes.

Nach einer vorteilhaften Ausgestaltung der Erfindung ist der Betätigungsknopf an dem Hebel mittels eines Kreuzgelenkes gelagert. Somit ist ein platzsparender Aufbau sichergestellt, weil die Gelenkpunkte in allen Achsen in einer Ebene liegen. Der Betätigungsknopf läßt sich also in vier Richtungen bedienen, wodurch eine optimale Funktion erreicht wird.

Die Herstellung des Hebelschalters soll kostengünstig und einfach zu bewerkstelligen sein, was sich durch möglichst wenige Einzelteile erreichen läßt. Daher werden nach einer Weiterbildung der Erfindung die Bewegungen des kreuzgelenkig gelagerten Betätigungsknopfes auf die Bewegungen der Schaltfunktionsteile in einer Ebene umgewandelt. Sonach ist nur in einer Ebene eine Kontaktarbeitsfläche erforderlich, was einfach und preiswert in der Herstellung und in der Montage ist.

Bei einer vorteilhaften Ausführungsform weist der Betätigungsknopf an seinem dem Kreuzgelenk gegenüberliegenden Ende einen linear beweglichen Druckknopf auf, dessen Bewegung linear auf die Schaltfunktionsteile weitergeleitet wird. Hierdurch ist das Schalten von mindestens einer weiteren zusätzlichen Funktion sichergestellt.

Die Einzelteile des Hebelschalters sollen einfach und kostengünstig hergestellt werden. Außerdem muß die Montage ohne großen Aufwand zu bewerkstelligen sein, wobei nach dem Zusammenbau ein einheitliches Äußeres vorhanden sein muß. Zweckmäßigerweise umfaßt daher der Betätigungsknopf eine Oberschale und eine Unterschale, wobei das Kreuzgelenk durch eine auf der Trennaht zwischen der Oberschale und der Unterschale angeordnete Schwenkachse und eine dazu senkrecht in der Oberschale und der Unterschale eingelassene Gelenkachse realisiert ist. Dadurch sind alle Formelemente in der Schließrichtung eines Spritzwerkzeuges angeordnet, womit eine kostengünstige Herstellung sowie ein kostengünstiges Werkzeug ermöglicht wird.

Bei dem Kreuzgelenk muß das Verdrehen des Hebels verhindert werden, um undefinierte Schaltzustände zu vermeiden. Der Hebel darf sich nur in den zugelassenen Bewegungsrichtungen verschwenken lassen, wobei auch eine Begrenzung der Verschwenkbewegung erforderlich ist. Weiterhin soll das Kreuzgelenk einfach im Aufbau und leicht zu montieren sein. Daher sind nach einer Weiterbildung der Erfindung die Gelenkachse und die Schwenkachse im Betätigungsknopf durch zwei eine Hohlkugel formende Halbschalen gebildet, wobei der Schwenkachse mindestens eine einen Anschlag aufweisende, hebelparallele Schwenknut zugeordnet ist. Somit ist bereits die Verschwenkbewegung in zwei gegenüberliegende Richtungen begrenzt.

Bevorzugt umfaßt am Hebel die Schwenkachse eine in der Hohlkugel einliegende Gelenkkugel und die Gelenkachse an der Gelenkkugel angeordnete, in die Halbschalen bzw. in die Schwenkknuten eintauchende Lagerzapfen. Hierdurch sind die Teile des Betätigungsknopfes und des Hebels aufeinander abgestimmt und gewährleisten eine sichere Funktion.

Die Schaltfunktionsteile müssen entsprechend der Stellung des Betätigungsknopfes eine definierte Stellung einnehmen. Für die direkte Weiterleitung der Bewegung und den korrekten Funktionsablauf ist bevorzugt an der Gelenkkugel ein Schaltzapfen vorhanden, der einerseits an seiner der Gelenkkugel abgewandten Rastseite eine federbelastete Druckhülse trägt, die in eine gegenüberliegende Schaltkulisse eingreift, und der andererseits zwischen der Gelenkkugel und der Rastseite ein Schwenkschaltglied und ein Linearschaltglied beaufschlagt, wobei der Schaltzapfen eine Schaltplatine trägt, die beim Verschwenken um die Gelenkachse mit einem betätigungsknopfseitigen Schwenkstop in Berührung kommt. Hierdurch ist die Verschwenkbewegung des Betätigungsknopfes in den anderen beiden Richtungen begrenzt. Die federbelastete Druckhülse bewirkt zum einen die Rückstellung in die Mittellage und zum anderen die mittige Zentrierung des Betätigungsknopfes des nicht betätigten Hebelschalters. Da die Schaltplatine mit dem Schaltzapfen und somit mit dem Hebel verbunden ist, kann diese Einheit bereits vormontiert eingesetzt werden, was sich in der Endmontage als kostengünstig erweist.

Damit der Hebel in alle Richtungen geschwenkt werden kann, müssen die Schaltfunktionsteile einerseits die Bewegung ermöglichen und andererseits muß die gewünschte Schaltfunktion erreicht werden. Zweckmäßigerweise besitzt daher das Schwenkschaltglied ein den Schaltzapfen aufnehmendes, rechteckiges Schwenkloch, das seine größte Ausdehnung in Richtung der Trennaht zwischen der Oberschale und der Unterschale aufweist und an seinen der Trennaht zugewandten Flächen mit jeweils einem Führungsstift versehen ist. Durch diese Ausgestaltung bleibt daher beim Verschwenken um die Gelenkachse das Schwenkschaltglied an der gleichen Stelle. Ein anderer Schaltzustand wird dadurch erreicht, daß die Schaltplatine durch den Schwenkzapfen an der im Schwenkschaltglied gehalterten Kontaktbrücke entlang bewegt wird. Das Schwenkschaltglied sitzt mit seinen Führungsstiften in den Seitenwänden des Betätigungsknopfes und bleibt an dieser Stelle solange, bis eine Beaufschlagung auf die langen Seiten des rechteckigen Schwenkloches erfolgt.

Weitere Kontaktpfade werden geschlossen, wenn der Betätigungsknopf um seine andere Achse geschwenkt wird. Da die Schaltfunktionsteile nur in einer Ebene, nämlich der Schaltplatine, wirken, muß das Schwenkschaltglied eine neue Lage einnehmen. Dies wird bevorzugt dadurch erreicht, daß der Betätigungsknopf in der Oberschale und der Unterschale beidseitig je eine von der Trennaht ausgehende, schräg verlaufende, den Führungsstift des Schwenkschaltgliedes aufnehmende Führungsnut aufweist. Ändert sich die Position des Schwenkzapfens, so ändert sich dadurch auch die Position des Schwenkschaltgliedes, das sich in Zusammenwirkung von Führungstift mit Führungsnut je nach Schwenkrichtung zum Kreuzgelenk hin oder davon weg bewegt. Mit nur einem Schwenkschaltglied lassen sich also bei der Bewegung des Betätigungsknopfes in vier unterschiedlichen Richtungen unterschiedliche Kontaktpfade herstellen. Es ist nur eine Schaltplatine erforderlich, was sich sowohl in den Herstellungs- und auch in den Montagekosten günstig bemerkbar macht. Weiterhin können dadurch die Abmaße des Hebelschalters klein gehalten werden.

Zweckmäßigerweise umfaßt das Schwenkschaltglied mindestens eine der Schaltplatine zugeordnete Kontaktbrücke. Hierdurch ist eine zuverlässige Kontaktübertragung gewährleistet. Je nach gewünschtem Strompfad ist der Einsatz einer anderen Kontaktbrücke möglich, wodurch eine Vielzahl von unterschiedlichen Schaltzuständen erreichbar ist.

Häufig wird eine weitere Schaltfunktion in Linearrichtung des Betätigungsknopfes gefordert. Nach einer weiteren Ausgestaltung der Erfindung besitzt der Schaltzapfen in Richtung der Trennaht mindestens eine Linearführung, in die ein entsprechender Führungszapfen des Linearschaltgliedes schiebebeweglich eingreift. Nur durch das Einbringen eines neuen Funktionselementes, nämlich der Linearführung, an ein bereits vorhandenes Bauteil läßt sich somit die exakte Führung des Linearschaitgliedes ohne weitere neue Einzelteile bewerkstelligen.

Um ein kompaktes, leicht herzustellendes Linearschaltglied zu erreichen, weist zweckmäßigerweise das Linearschaltglied eine den Führungszapfen tragende Grundplatte auf, wobei zwischen der Grundplatte und einer in Richtung des Kreuzgelenkes angeordneten Schalenwand des Betätigungsknopfes eine Druckfeder eingespannt ist, an der Grundplatte ein von dem Kreuzgelenk wegweisender Fortsatz angeformt ist, der sich unter der Wirkung der Druckfeder am Druckknopf abstützt, und an dem Linearschaltglied ein der Schaltplatine zugeordnetes Kontaktglied befestigt ist.

Bevorzugt ist die Schaltplatine über ein Befestigungslager mit dem Schaltzapfen fest verbunden. Hierdurch werden zusätzliche Toleranzen vermieden, was sich auf die Qualität der Kontaktverbindungen positiv auswirkt.

Ferner ist vorgesehen, daß der Betätigungsknopf in seiner Trennaht mit einer den Druckknopf schiebebeweglich aufnehmenden Lagerung versehen ist. Wird diese Lagerung nicht benötigt, da die zusätzliche Funktion über den Druckknopf nicht gewünscht ist, so wird statt des schiebebeweglichen Druckknopfes ein starrer Blindstopfen in der Lagerung eingesetzt.

Zweckmäßigerweise besteht die Lagerung aus einem Führungssteg, Führungsschalen und je einem in der Oberschale und Unterschale angebrachten, Tastkulissen aufweisenden Drucksteg. Diese Ausgestaltung gewährleistet ein kostengünstiges Herstellen, da nur dünne Konturen notwendig sind. Ferner werden Einfallstellen bei den Spritzteilen vermieden.

Damit die Montagerichtung des Druckknopfes eindeutig und damit die Rückstellung immer gewährleistet ist, besitzt nach einer vorteilhaften Ausführungsform der Druckknopf im Innern des Betätigungsknopfes einen Ansatz, der in Zusammenwirkung mit der Lagerung den Verschiebeweg des Druckknopfes nach außen begrenzt, wobei der Ansatz eine den Führungssteg aufnehmende Ansatznut und zentrisch die Schaltkulisse aufweist, deren Ausrichtung mit den Schwenkbewegungen des Betätigungsknopfes übereinstimmt.

Zwecks Erzielung einer ausreichenden Rückstellkraft des Betätigungsknopfes sowie einer sicheren neutralen Zentrierung weist bevorzugt die Schaltkulisse vier senkrecht zueinander ausgerichtete, im Zentrum tiefliegende und nach außen flach werdende Kulissenzweige auf, wobei zwei gegenüberliegende Kulissenzweige im Bereich der Trennaht zwischen der Oberschale und der Unterschale liegen.

Soll eine der Schaltstellungen des Betätigungsknopfes verrastet sein, so besitzt nach einer weiteren Ausführung der Erfindung mindestens ein Kulissenzweig in seinem flachen Bereich einen Raststeg.

Der Schaltweg des Druckknopfes ist sehr kurz. Damit die Bedienperson eine taktile Rückmeldung über das erfolgreiche Durchführen des Schaltvorganges erhält, weist der Druckknopf bevorzugt eine federbelastete Schiebehülsen aufnehmende Bohrung auf, wobei die Schiebehülsen mit den Tastkulissen der Druckstege zusammenwirken. Zum Überwinden der Erhöhung der Tastkulisse ist eine erhöht Kraft erforderlich, die von der Bedienperson bewußt wahrgenommen wird.

Der Hebelschalter wird in der Regel in einem sicherheitsrelevanten Bereich im Kraftfahrzeug eingebaut. Da der Hebelschalter über seine Befestigungsstelle vorsteht, ist eine Verletzungsgefahr bei einem Unfall gegeben. Um dies zu vermeiden, ist der Hebel zwischen der Gelenkkugel und den Befestigungselementen mit mindestens einer Sollbruchstelle versehen.

Bevorzugt umfassen die Befestigungselemente am Hebel mindestens ein eine Schraube aufnehmendes Befestigungsloch. Hierdurch kann der Hebelschalter einfach montiert werden, d.h. es sind keine Spezialwerkzeuge erforderlich.

Damit die dem Hebelschalter zugeordneten Funktionen jederzeit zweifelsfrei erkannt werden, besitzen zweckmäßigerweise der Betätigungsknopf und der Druckknopf durchscheinende Symbolbereiche, die von im Innern des Betätigungsknopfes angeordneten Lichtquellen beleuchtbar sind.

Der der Erfindung zugrundeliegende Gedanke wird in der nachfolgenden Beschreibung anhand eines Ausführungsbeispieles, das in der Zeichnung dargestellt ist, näher erläutert. Es zeigen:
- Fig. 1: eine Ansicht auf einen an einem Lenkrad befestigten erfindungsgemäßen Hebelschalter,
- Fig. 2: eine vergrößerte Ansicht auf die Darstellung nach Fig. 1 in Pfeilrichtung II mit Schnittausbrüchen,

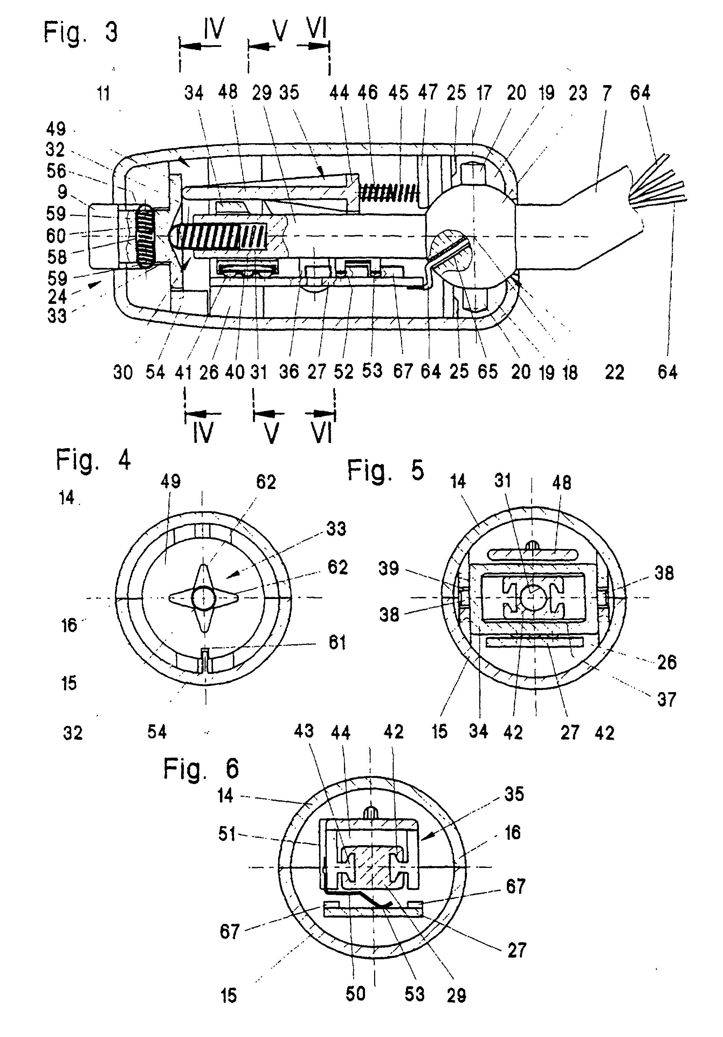

- Fig. 3: einen vergrößerten Schnitt durch den Hebelschalter nach Fig. 1 gemäß der Linie III-III,
- Fig. 4: einen Schnitt durch die Darstellung nach Fig. 3 gemäß der Linie IV-IV,
- Fig. 5: einen Schnitt durch die Darstellung nach Fig. 3 gemäß der Linie V-V,
- Fig. 6: einen Schnitt durch die Darstellung nach Fig. 3 gemäß der Linie VI-VI,
- Fig. 7: den Hebelschalter gemäß Fig. 2 in Schaltstellung 0 im Schnitt,
- Fig. 8: den Hebelschalter gemäß Fig. 7 in Schaltstellung H,
- Fig. 9: den Hebelschalter gemäß Fig. 7 in Schaltstellung U,
- Fig. 10: eine Ansicht in die bestückte Unterschale des Hebelschalters in Schaltstellung 0 nach Fig. 7 gemäß der Linie X-X,
- Fig. 11: den Hebelschalter gemäß Fig. 10 in Schaltstellung V,
- Fig. 12: den Hebelschalter gemäß Fig. 10 in Schaltstellung B,
- Fig. 13: eine alternative vergrößerte Darstellung der Einzelheit XIII gemäß Fig. 7 in Schaltstellung 0,
- Fig. 14: die vergrößerte Einzelheit gemäß Fig. 13 in gerasteter Schaltstellung U und
- Fig. 15: einen Schnitt durch die Darstellung nach Fig. 13 gemäß der Linie XV-XV.

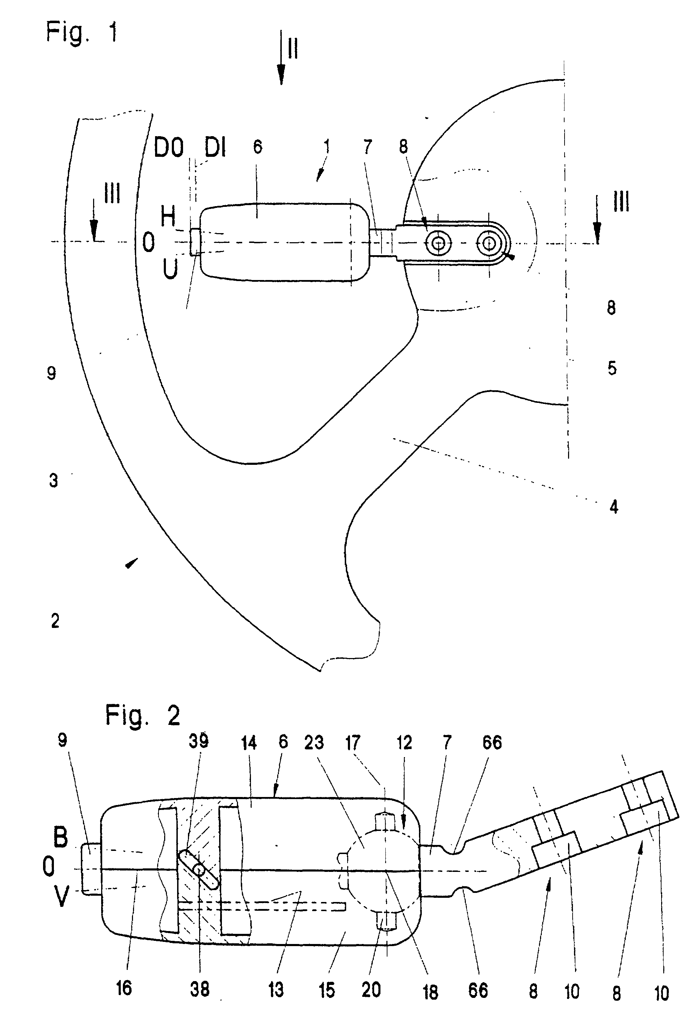

In der Fig. 1 ist ein Hebelschalter 1 einem Lenkrad 2 zugeordnet. Der Lenkradkranz 3 ist über Speichen 4 mit der Nabe 5 verbunden, in der einr Airbag untergebracht ist. Der Hebelschalter 1 umfaßt einen Betätigungsknopf 6 mit einem darin integrierten Druckknopf 9 und einen Hebel 7, der über Befestigungselemente 8 an der Nabe 5 des Lenkrades 2 befestigt ist. Die Befestigung des Hebels 7 kann entweder an einem feststehenden oder an einem mit dem Lenkrad 2 mitdrehenden Teil der Lenksäule erfolgen. Im Bereich der Nabe 5 verbreitert sich der Hebel 7, wobei im verbreiterten Bereich zwei voneinander beabstandete, als Befestigungslöcher ausgelegte Stufenbohrungen 10 eingelassen sind, die die Befestigungselemente 8 darstellen (siehe auch Fig. 2). Die Stufenbohrungen 10 sind so ausgelegt, daß der Hebelschalter 1 mit Innensechskantschrauben (nicht dargestellt) befestigt werden kann. Im Innern des Betätigungsknopfes 6 sind Schaltfunktionsteile 11 angeordnet, mit denen sowohl die mechanischen als auch die elektrischen Funktionen bewerkstelligt werden.

In der Fig. 1 ist der Betätigungsknopf 6 des Hebelschalters 1 in der Schaltstellung "0" dargestellt. Mit Strichpunktlinien sind die Schaltstellungen "H" und "U" angedeutet. Der Druckknopf 9 ist in der Schaltstellung "D0" dargestellt, während mit einer Strichpunktlinie die Schaltstellung "DI" angedeutet ist. Die Fig. 2 zeigt den Hebelschalter 1 ebenfalls in der Schaltstellung "0", wobei die Schaltstellungen "V" und "B" mit Strichpunktlinien angedeutet sind.

Der Betätigungsknopf 6 ist über ein Kreuzgelenk 12 gelenkig mit dem Hebel 7 verbunden. Alle Bewegungen des kreuzgelenkig gelagerten Betätigungsknopfes 6 wirken auf die Schaltfunktionsteile 11. Sie werden derart umgewandelt, daß sie in einer Ebene 13 wirken. Der im Betätigungsknopf 6 gelagerte, linear betätigbare Druckknopf 9 wirkt auch auf die Schaltfunktionsteile 11, welche alle der Ebene 13 zugeordnet sind.

Der Betätigungsknopf 6 umfaßt eine Oberschale 14 und eine Unterschale 15 mit einer dazwischen angeordneten Trennaht 16. An der dem Hebel 7 zugewandten Seite befindet sich das Kreuzgelenk 12. Eine Achse, nämlich die Schwenkachse 18, liegt im Niveau der Trennaht 16, während die zweite Achse, nämlich die Gelenkachse 17, senkrecht dazu in der Oberschale 14 und der Unterschale 15 angeordnet ist. Dazu sind hebelparallele Schwenknuten 19, in denen hebelfeste Lagerzapfen 20 verschwenkbar einliegen im Innern der Oberschale 14 und der Unterschale 15 eingelassen. Im Betätigungsknopf 6 ist die Schwenkachse 18 durch in der Trennaht 16 liegende, durch Stege geformte Halbschalen 21 gebildet, die zusammengesetzt eine Hohlkugel 22 ergeben. In der Hohlkugel 22 liegt eine am Hebel 7 befestigte Gelenkkugel 23. An der Gelenkkugel 23 sind zwei diametrale Lagerzapfen 20 angeformt, die in die in der Oberschale 14 und der Unterschale 15 eingelassenen Schwenknuten 19 eingreifen. Durch die beiden Lagerzapfen 20 wird das Verdrehen des Hebels 7 um seine Längsachse verhindert. In den Schwenknuten 19 ist je ein Anschlag 25 vorhanden. Beim Betätigen des Hebels 7 um die Schwenkachse 18 kommt der Lagerzapfen 20 an dem Anschlag 25 zu liegen und verhindert das weitere Verschwenken. Wird der Hebel 7 um die Gelenkachse 17 verschwenkt, so wird diese Bewegung durch einen betätigungsknopfseitigen Schwenkstop 26 begrenzt. Fest mit dem Hebel 7 ist eine Schaltplatine 27 verbunden, die im dem Kreuzgelenk 12 gegenüberliegenden Bereich eine beidseitige Ausstanzung 28 aufweist, mit der die Schaltplatine 27 sich in den Grenzlagen an dem Schwenkstop 26 anlegt. Von der Schaltplatine 27 gehen angelötete elektrische Leitungen 64 ab, die durch eine Leitungsbohrung 65 oder eine Nut durch die Gelenkkugel 23 und den Hebel 7 nach außen geführt sind.

Die Gelenkkugel 23 des Hebels 7 trägt einen Schaltzapfen 29, der sich zentral im Innern des Betätigungsknopfes 6 erstreckt. An seiner der Gelenkkugel 23 abgewandten Rastseite 30 ist eine Sackbohrung 31 eingelassen, in die eine federbelastete Druckhülse 32 eingesetzt ist. Die Druckhülse 32 greift in eine gegenüberliegende Schaltkulisse 33 ein und sorgt für eine Rückstellung des Hebels 7 in seine Schaltstellung "0". Auf dem Bereich zwischen der Rastseite 30 und der Gelenkkugel 23 trägt der Schaltzapfen 29 ein Schwenkschaltglied 34 am äußeren Ende und ein Linearschaltglied 35 im Bereich der Gelenkkugel 23. In Richtung der Unterschale 15 ist am Schaltzapfen 29 ein Befestigungslager 36 angeformt. Über das Befestigungslager 36 ist die Schaltplatine 27 fest mit dem Schaltzapfen 29 des Hebels 7 verbunden und schwenkt folglich immer mit. Der Abstand zwischen dem Schaltzapfen 29, der die Schaltglieder 34 und 35 führt, und der Oberseite der Schaltplatine 27 ist immer gleich, wodurch die Voraussetzung für eine sichere Kontaktübertragung gegeben ist. In Richtung zum Schaltzapfen 29 weist die Schaltplatine 27, die als Leiterplatte ausgestaltet ist, Kontaktpfade auf. An sechs Stellen sind überbrückende Widerstände 67 angelötet. Alternativ ist es auch möglich, die Schaltplatine 27 als ein umspritztes Stanzgitter auszubilden.

Das Schwenkschaltglied 34 ist im Querschnitt rechteckig und besitzt ein rechteckiges Schwenkloch 37, das so breit bemessen ist, daß der Schaltzapfen 29 beim Verschwenken um die Gelenkachse 17 nicht anschlägt. In der Höhe ist das Schwenkloch 37 geringfügig größer als die Höhe des Schaltzapfens 29, damit dieser leicht im Schwenkloch 37 gleiten kann. Seitlich im Bereich der Trennaht 16 ist auf jeder Seite des Schwenkschaltgliedes 34 je ein Führungsstift 38 angeformt. Die Breite des Schwenkschaltgliedes 34 ist so ausgelegt, daß es zwischen den beiden Schwenkstops 26 geführt ist. Die Führungsstifte 38 reichen bis in den Bereich der Schwenkstops 26 hinein, die dort eine Führungsnut 39 formen.

Die schräg unter 45° verlaufende Führungsnut 39 ist in den Seitenwänden des Betätigungsknopfes 6 eingelassen. Die Führungsnut 39 wird von den Oberseiten des Schwenkstops 26 gebildet, die beim Zusammenfügen von Oberschale 14 und Unterschale 15 den Bereich der Führungsnut 39 freilassen. In dieser Führungsnut 39 liegt der Führungsstift 38 des Schwenkschaitgliedes 34 gleitbeweglich ein.

Das Schwenkschaltglied 34 weist an seiner der Schaltplatine 27 zugewandten Seite eine ringsum geschlossene Ausbuchtung 40 auf, in der eine federnde Kontaktbrücke 41 eingesetzt ist. Die Kontaktbrücke 41 stützt sich in der Ausbuchtung 40, in der sie ringsum gehalten wird, ab und liegt gegenüber mit ihren Kalotten auf der die Kontaktbahnen aufweisenden Schaltplatine 27 auf. Dort verbindet die Kontaktbrücke 41, je nach Stellung des Hebels 7, entsprechende Kontaktpfade.

Seitlich auf dem Niveau der Trennaht 16 ist der Schaltzapfen 29 beidseitig mit einer Linearführung 42 versehen, die als Schwalbenschwanzführung ausgelegt ist. Ein entsprechender Führungszapfen 43 des Linearschaltgliedes 35 greift gleitbeweglich in die Linearführung 42 ein. Dadurch kann das Linearschaltglied 35 sich nur linear parallel zur Schaltplatine 27 bewegen. Die beiden Führungszapfen 43 sind mit der Grundplatte 44 des Linearschaltgliedes 35 verbunden. In Richtung zum Kreuzgelenk 12 ist an der Grundplatte 44 ein eine Druckfeder 45 haltender Sporn 46 angespritzt. In der Oberschale 14 ragt eine Schalenwand 47 in der Nähe des Kreuzgelenkes 12 bis fast an die Gelenkkugel 23 heran. Die auf dem Sporn 46 sitzende Druckfeder 45 stützt sich an der Schalenwand 47 ab und schiebt das Linearschaltglied 35 in Richtung des Druckknopfes 9. Die Grundplatte 44 besitzt außerdem einen Fortsatz 48, der oberhalb des Schaltzapfens 29 in gleicher Höhenlage zum Sporn 46 angeordnet ist. Der Fortsatz 48 erstreckt sich oberhalb des Schwenkschaltgliedes 34 und stützt sich auf einem Ansatz 49 des Druckknopfes 9 ab. Ein Kontaktglied 50 ist an einer Außenwand 51 des Linaerschaltgliedes 35 befestigt. Das Kontaktglied 50 ist unterhalb des Schaltzapfens 29 parallel zu diesem abgebogen und besitzt eine weitere Biegung, über die es zur Schaltplatine 27 ausgerichtet ist. In diesem Bereich ist eine Ausklinkung 52 eingebracht, durch die zwei Kontaktzungen 53 geformt sind, die im Kontaktbereich zur Schaltplatine 27 verrundet sind.

Im Betätigungsknopf 6 ist auf der dem Kreuzgelenk 12 gegenüberliegenden Seite eine Lagerung 24 eingelassen, in der der Druckknopf 9 schiebebeweglich gelagert ist. Die Lagerung 24 erstreckt sich von der Trennaht 16 beidseitig in die Oberschale 14 und die Unterschale 15, wobei die Wände der Lagerung 24 als dünne Formteile ausgebildet sind. Die Formteile, welche die Lagerung 24 bilden, bestehen in der Unterschale 15 aus einem Führungssteg 54, zweigeteilten Führungsschalen 55 und einem eine Tastkulisse 56 tragendem Drucksteg 57. In der Oberschale 14 sind bis auf den Führungssteg 54 ebenfalls alle Formteile vorhanden.

In dem Druckknopf 9 ist im Bereich der Lagerung 24 eine durchgehende Bohrung 58 eingelassen, in der sich federbelastete Schiebehülsen 59 befinden, die sich unter der Wirkung einer Feder 60 an den Tastkulissen 56 der Druckstege 57 abstützen. Der Druckknopf 9 besitzt einen im Querschnitt runden Ansatz 49 mit einer den Führungssteg 54 der Lagerung 24 gleitbeweglich aufnehmenden Ansatznut 61. Der Ansatz 49 liegt im Innern des Betätigungsknopfes 6 an der Lagerung 24 an und begrenzt den Hub des Druckknopfes 9, der unter der Wirkung der Druckfeder 45 nach außen gedrückt wird. In den Ansatz 49 ist zentrisch eine nach innen zur Rastseite 30 des Hebels 7 hin gerichtete Schaltkulisse 33 eingelassen. Ein Verdrehen der Schaltkulisse 33 ist nicht möglich, da der Ansatz 49 durch die Zusammenwirkung von Führungssteg 54 und Ansatznut 61 unverdrehbar geführt ist. Die Schaltkulisse 33 besteht aus vier Kulissenzweigen 62, die alle vom gleichen Zentrum ausgehen, in dem sie tiefliegend sind, und nach außen flach werden, wobei sie über den gesammten Schwenkbereich des Betätigungsknopfes 6 vorliegen. Die Kulissenzweige 62 stehen senkrecht aufeinander, wobei zwei gegenüberliegende Kulissenzweige 62 im Bereich der Trennaht 16 zwischen der Oberschale 14 und der Unterschale 15 angeordnet sind.

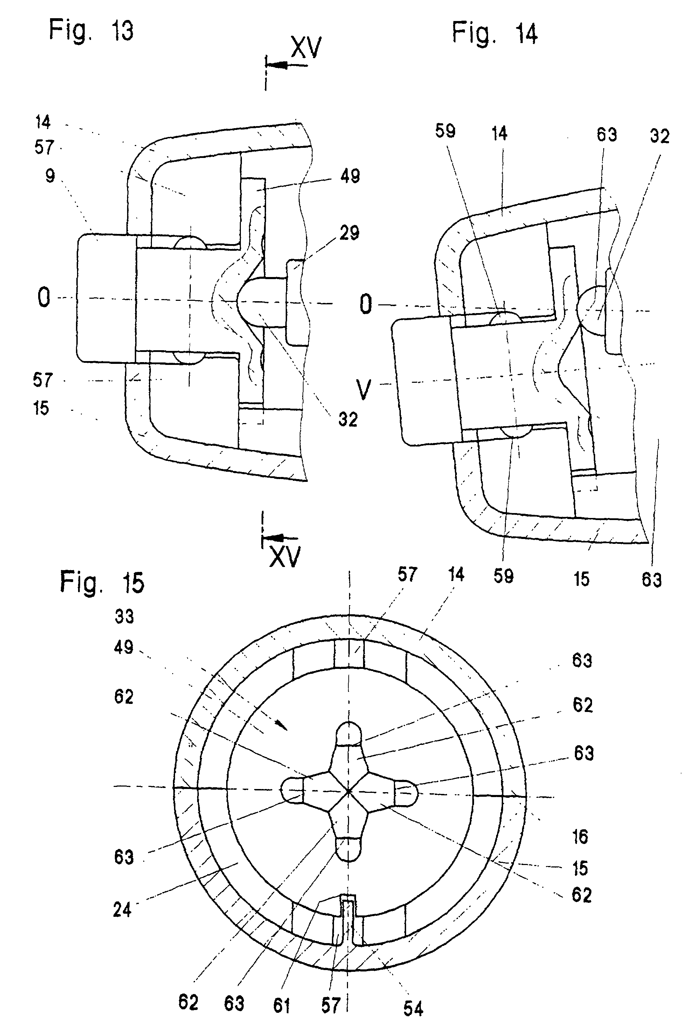

Bei einer alternativen Ausgestaltung (vergl. Fig. 13 bis 15) ist in jedem Kulissenzweig 62 ein Raststeg 63 zwischen dem Zentrum und dem Endbereich des Kulissenzweiges 62 vorhanden. Sobald die federbelastete Drückhülse 32 über den Raststeg 63 hinausbewegt wird, wird die entsprechende Schaltstellung verrastet. Ein Entrasten erfolgt von Hand, indem der Betätigungsknopf 6 zurückbewegt wird.

Der Hebel 7 weist eine Sollbruchstelle 66 zwischen dem Betätigungsknopf 6 und den Befestigungselementen 8 auf. Die Sollbruchstelle 66 gewährleistet bei einem Unfall den Abbruch des Betätigungsknopfes 6 zur Vermeidung von Verletzungen.

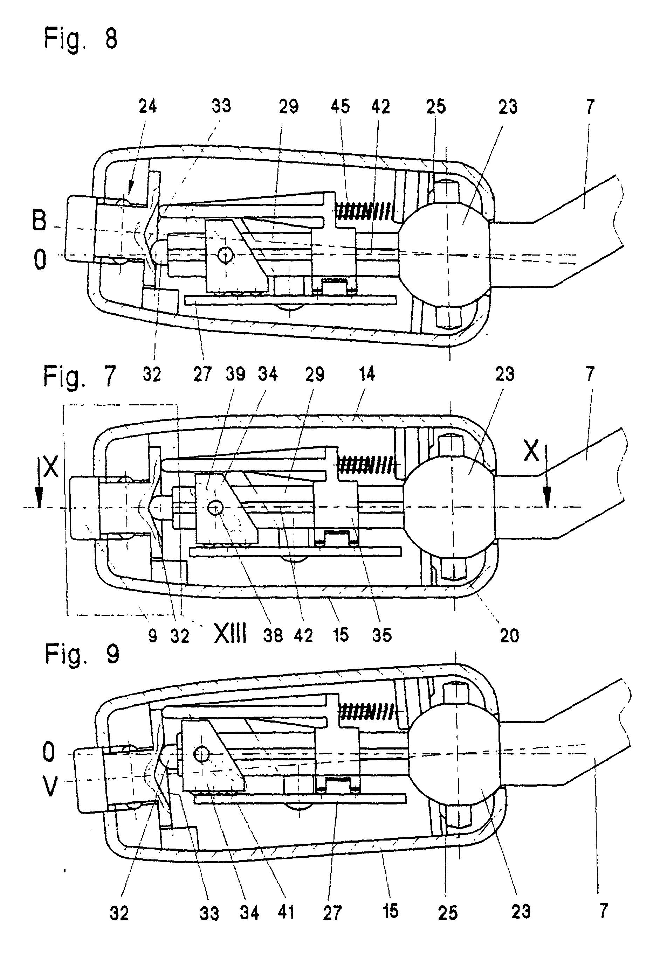

Der Schaltablauf von der Schaltstellung "0" in die Schaltstellungen "B" und "V" ist in den Fig. 7 bis 9 dargestellt. Wird der Betätigungsknopf 6 um die Schwenkachse 18 im Uhrzeigersinn betätigt, erreicht er seine Endstellung "B" wenn der Lagerzapfen 20 am Anschlag 25 anschlägt. Die Druckhülse 32 gleitet im entsprechenden Kulissenzweig 62 der Schaltkulisse 33. Die betätigungsknopffeste Führungsnut 39 schwenkt mit, und das am Schaltzapfen 29 und in der Führungsnut 39 schiebebeweglich geführte Schwenkschaltglied 34 gleitet auf dem.

Schaltzapfen 29 in Richtung des Kreuzgelenkes 12 und dessen Kontaktbrücke 41 verbindet und/oder öffnet Strompfade auf der Schaltplatine 27. Eine sehr geringe Gleitbewegung führt auch das Linearschaltglied 35 aus. Diese Bewegung ist jedoch so gering, daß die Kontaktpunkte auf der Schaltplatine 27 nicht verlassen werden. Die Bewegung ist sogar von Vorteil, da dadurch eine Kontaktreinigung durchgeführt wird. Beim Verschwenken in die Schaltstellung "V", entgegen dem Uhrzeigersinn, laufen alle Funtionen analog entgegengesetzt ab. Das Schwenkschaltglied 34 wird in Richtung der Rastseite 30 des Schaltzapfens 29 verschoben und seine Kontaktbrücke 41 verbindet und/oder öffnet andere Strompfade. Nach dem Loslassen des Betätigungsknopfes 6 schwenkt dieser unter der Wirkung der federbelasteten Drückhülse 32 in die Schaltstellung "0" zurück.

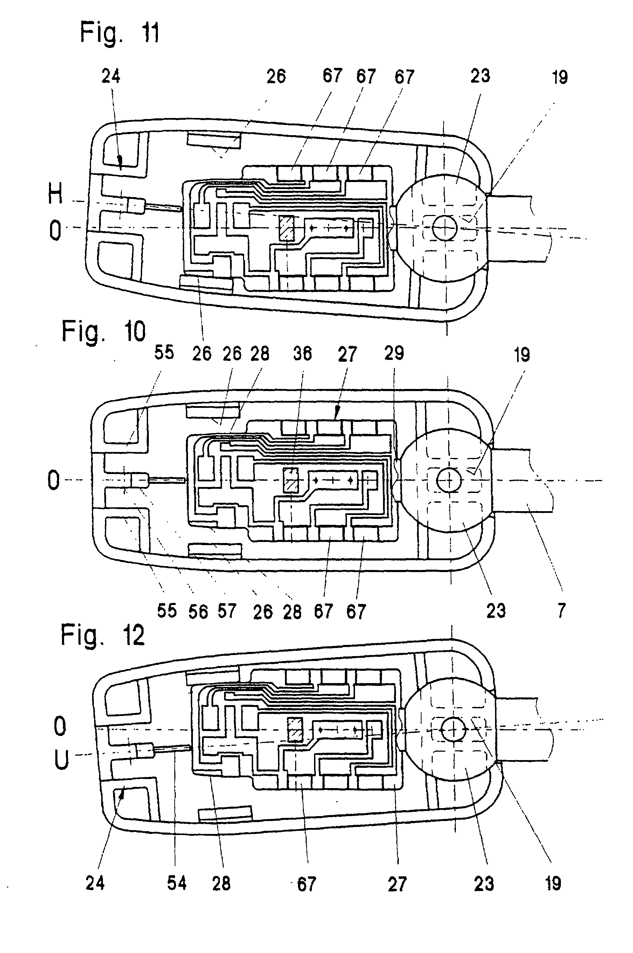

In den Figuren 10 bis 12 ist der Schaltablauf von der Schaltstellung "0" in die Schaltstellungen "H" und "U" dargestellt. Dieser Schaltablauf geschieht im rechten Winkel zu dem vorher geschilderten Schaltablauf. Beim Verschwenken des Betätigungsknopfes 6 um die Gelenkachse 17 erfolgt die Begrenzung der Bewegung durch die Anlage der Ausstanzung 28 an den Schwenkstops 26. Dabei gleitet die Kontaktbrücke 41 des nicht verschwenkbaren Schwenkschaltgliedes 34 auf einer Teilkreisbahn der Schaltplatine 27. Die Rückstellung erfolgt wie zuvor beschrieben.

Wird hingegen der Druckknopf 9 von der Schaltstellung "D0" in die Schaltstellung "DI" gebracht, so geschieht dies gegen die Kraft der federbelasteten Druckhülse 32 und der Druckfeder 45, die auch die Rückstellung bewirken. Beim Eindrücken muß noch der Druckpunkt der Tastkulisse 56 überwunden werden. Dazu müssen die durch die Feder 60 beaufschlagten Schiebehülsen 59 zusammengedrückt werden, wobei die Schiebehülsen 59 auf dem erhöhten Teil der Tastkulisse 56 zur Auflage kommen. Hierbei wird ein deutlich zu fühlender Druckpunkt wahrnehmbar, durch den das erfolgte Schalten zurückgemeldet wird. Die Begrenzung der Schaltbewegung erfolgt durch die Anlage des Ansatzes 49 an der Rastseite 30 des Schaltzapfens 29. Über den Ansatz 49 wird das mit seinem Fortsatz 48 an dem Druckknopf 9 anliegende Linearschaltglied 35 in der Linearführung 42 am Schaltzapfen 29 in Richtung des Kreuzgelenkes 12 bewegt. Das am Linearschaltglied 35 befestigte Kontaktglied 50 gleitet mit seinen kontaktzungen 53 auf der Schaltplatine 27 und verbindet und/oder öffnet Strompfade. Nach dem Loslassen wird der Druckknopf selbsttätig durch die Federn wieder in seine Stellung "D0" geschoben, und der Ansatz 49 legt sich an der Lagerung 24 an.

### Bezugszeichenliste

- 1: Hebelschalter
- 2: Lenkrad
- 3: Lenkradkranz
- 4: Speiche
- 5: Nabe
- 6: Betätigungsknopf
- 7: Hebel
- 8: Befestigungselement
- 9: Druckknopf
- 10: Stufenbohrung
- 11: Schaltfunktionsteile
- 12: Kreuzgelenk
- 13: Ebene
- 14: Oberschale
- 15: Unterschale
- 16: Trennaht
- 17: Gelenkachse
- 18: Schwenkachse
- 19: Schwenknut
- 20: Lagerzapfen
- 21: Halbschalen
- 22: Hohlkugel
- 23: Gelenkkugel
- 24: Lagerung
- 25: Anschlag
- 26: Schwenkstop
- 27: Schaltplatine
- 28: Ausstanzung
- 29: Schaltzapfen
- 30: Rastseite
- 31: Sackbohrung
- 32: Druckhülse
- 33: Schaltkulisse
- 34: Schwenkschaltglied
- 35: Linearschaltglied
- 36: Befestigungslager
- 37: Schwenkloch
- 38: Führungsstift
- 39: Führungsnut
- 40: Ausbuchtung
- 41: Kontaktbrücke
- 42: Linearführung
- 43: Führungszapfen
- 44: Grundplatte
- 45: Druckfeder
- 46: Sporn
- 47: Schalenwand
- 48: Fortsatz
- 49: Ansatz
- 50: Kontaktglied
- 51: Außenwand
- 52: Ausklinkung
- 53: Kontaktzungen
- 54: Führungssteg
- 55: Führungsschale
- 56: Tastkulisse
- 57: Drucksteg
- 58: Bohrung
- 59: Schiebehülsen
- 60: Feder
- 61: Ansatznut
- 62: Kulissenzweig
- 63: Raststeg
- 64: elektrische Leitungen
- 65: Leitungsbohrung
- 66: Sollbruchstelle
- 67: Widerstand

## Patentansprüche

1. Elektrischer Hebelschalter, insbesondere für ein Kraftfahrzeug, mit einem an dessen Hebel (7) angeordneten Betätigungsknopf (6), **dadurch gekennzeichnet, daß** der Hebel (7) an seinem einen Ende mit Befestigungselementen (8) versehen und an seinem anderen Ende gelenkig mit dem sämtliche Schaltfunktionsteile (11) aufnehmenden Betätigungsknopf (6) verbunden ist.

2. Hebelschalter nach Anspruch 1, **dadurch gekennzeichnet, daß** der Betätigungsknopf (6) an dem Hebel (7) mittels eines Kreuzgelenkes (12) gelagert ist.

3. Hebelschalter nach Anspruch 2, **dadurch gekennzeichnet, daß** die Bewegungen des kreuzgelenkig gelagerten Betätigungsknopfes (6) auf die Bewegungen der Schaltfunktionsteile (11) in einer Ebene umgewandelt werden.

4. Hebelschalter nach Anspruch 2 oder 3, **dadurch gekennzeichnet, daß** der Betätigungsknopf (6) an seinem dem Kreuzgelenk (12) gegenüberliegenden Ende einen linear beweglichen Druckknopf (9) aufweist, dessen Bewegung linear auf die Schaltfunktionsteile (11) weitergeleitet wird.

5. Hebelschalter nach einem der Ansprüche 2 bis 4, **dadurch gekennzeichnet, daß** der Betätigungsknopf (6) eine Oberschale (14) und eine Unterschale (15) umfaßt, wobei das Kreuzgelenk (12) durch eine auf der Trennaht (16) zwischen der Oberschale (14) und der Unterschale (15) angeordnete Schwenkachse (18) und eine dazu senkrecht in der Oberschale (14) und der Unterschale (15) eingelassene Gelenkachse (17) realisiert ist.

6. Hebelschalter nach Anspruch 5, **dadurch gekennzeichnet, daß** die Gelenkachse (17) und die Schwenkachse (18) im Betätigungsknopf (6) durch zwei, eine Hohlkugel bildende Halbschalen (21) gebildet sind, wobei der Schwenkachse (18) mindestens eine einen Anschlag (25) aufweisende, hebelparallele Schwenknut (19) zugeordnet ist.

7. Hebelschalter nach den Ansprüchen 5 und 6, **dadurch gekennzeichnet, daß** die Schwenkachse (18) eine in der Hohlkugel einliegende Gelenkkugel (23) und die Gelenkachse (17) an der Gelenkkugel (23) angeordnete, in die Halbschalen (21) bzw. in die Schwenknuten (19) eintauchende Lagerzapfen (20) umfaßt.

8. Hebelschalter nach Anspruch 7, **dadurch gekennzeichnet, daß** an der Gelenkkugel (23) ein Schaltzapfen (29) vorhanden ist, der einerseits an seiner der Gelenkkugel (23) abgewandten Rastseite (30) eine federbelastete Druckhülse (32) trägt, die in eine gegenüberliegende Schaltkulisse (33) eingreift, und der andererseits zwischen der Gelenkkugel (23) und der Rastseite (30) ein Schwenkschaltglied (34) und ein Linearschaltglied (35) beaufschlagt, wobei der Schaltzapfen (29) eine Schaltplatine (27) trägt, die beim Verschwenken um die Gelenkachse (17) mit einem betätigungsknopfseitigen Schwenkstop (26) in Berührung kommt.

9. Hebelschalter nach Anspruch 8, **dadurch gekennzeichnet, daß** das Schwenkschaltglied (34) einen den Schaltzapfen (29) aufnehmendes, rechteckiges Schwenkloch (37) besitzt, das seine größte Ausdehnung in Richtung der Trennaht (16) zwischen der Oberschale (14) und der Unterschale (15) aufweist und an seinen der Trennaht (16) zugewandten Flächen mit jeweils einem Führungsstift (38) versehen ist.

10. Hebelschalter nach einem der Ansprüche 5 bis 9, **dadurch gekennzeichnet, daß** der Betätigungsknopf (6) in der Oberschale (14) und der Unterschale (15) beidseitig je eine von der Trennaht (16) ausgehende, schräg verlaufende, den Führungsstift (38) des Schwenkschaltgliedes (34) aufnehmende Führungsnut (39) aufweist.

11. Hebelschalter nach einem der Ansprüche 8 bis 10, **dadurch gekennzeichnet, daß** das Schwenkschaltglied (34) mindestens eine der Schaltplatine (27) zugeordnete Kontaktbrücke (41) umfaßt.

12. Hebelschalter nach einem der Ansprüche 8 bis 11, **dadurch gekennzeichnet, daß** der Schaltzapfen (29) in Richtung der Trennaht (16) mindestens eine Linearführung (42) besitzt, in die ein entsprechender Führungszapfen (43) des Linearschaltgliedes (35) schiebebeweglich eingreift.

13. Hebelschalter nach einem der Ansprüche 8 bis 12, **dadurch gekennzeichnet, daß** das Linearschaltglied (35) eine den Führungszapfen (43) tragende Grundplatte (44) aufweist, wobei zwischen der Grundplatte (44) und einer in Richtung des Kreuzgelenkes (12) angeordneten Schalenwand (47) des Betätigungsknopfes (6) eine Druckfeder (45) eingespannt ist, an der Grundplatte (44) ein von dem Kreuzgelenk (12) wegweisender Fortsatz (48) angeformt ist, der sich unter der Wirkung der Druckfeder (45) am Druckknopf (9) abstützt, und an dem Linearschaltglied (35) ein der Schaltplatine (27) zugeordnetes Kontaktglied (50) befestigt ist.

14. Hebelschalter nach einem der Ansprüche 8 bis 13, **dadurch gekennzeichnet, daß** die Schaltplatine (27) über ein Befestigungslager (36) mit dem Schaltzapfen (29) fest verbunden ist.

15. Hebelschalter nach einem der Ansprüche 5 bis 14, **dadurch gekennzeichnet, daß** der Betätigungsknopf (6) in seiner Trennaht (16) mit einer den Druckknopf (9) schiebebeweglich aufnehmenden Lagerung (24) versehen ist.

16. Hebelschalter nach Anspruch 15, **dadurch gekennzeichnet, daß** die Lagerung (24) aus einem Führungssteg (54), Führungsschalen (55) und je einem in der Oberschale (14) und der Unterschale (15) angebrachten, Tastkulissen (56) aufweisenden Drucksteg (57) besteht.

17. Hebelschalter nach den Ansprüchen 15 und 16, **dadurch gekennzeichnet, daß** der Druckknopf (9) im Innern des Betätigungsknopfes (6) einen Ansatz (49) besitzt, der in Zusammenwirkung mit der Lagerung (24) den Verschiebeweg des Druckknopfes (9) nach außen begrenzt, wobei der Ansatz (49) eine den Führungssteg (54) aufnehmende Ansatznut (61) und zentrisch die Schaltkulisse (33) aufweist, deren Ausrichtung mit den Schwenkbewegungen des Betätigungsknopfes (6) übereinstimmt.

18. Hebelschalter nach einem der Ansprüche 8 bis 17, **dadurch gekennzeichnet, daß** die Schaltkulisse (33) vier senkrecht zueinander ausgerichtete, im Zentrum tiefliegende und nach außen flach werdende Kulissenzweige (62) aufweist, wobei zwei gegenüberliegende Kulissenzweige (62) im Bereich der Trennaht (16) zwischen der Oberschale (14) und der Unterschale (15) liegen.

19. Hebelschalter nach Anspruch 18, **dadurch gekennzeichnet, daß** mindestens ein Kulissenzweig (62) in seinem flachen Bereich einen Raststeg (63) besitzt.

20. Hebelschalter nach einem der Ansprüche 16 bis 19, **dadurch gekennzeichnet, daß** der Druckknopf (9) eine federbelastete Schiebehülsen (59) aufnehmende Bohrung (58) aufweist, wobei die Schiebehülsen (59) mit den Tastkulissen (56) der Druckstege (57) zusammenwirken.

21. Hebelschalter nach einem der Ansprüche 7 bis 20, **dadurch gekennzeichnet, daß** der Hebel (7) zwischen der Gelenkkugel (23) und den Befestigungselementen (8) mit mindestens einer Sollbruchstelle (66) versehen ist.

22. Hebelschalter nach einem der Ansprüche 1 bis 21, **dadurch gekennzeichnet, daß** die Befestigungselemente (8) am Hebel (7) mindestens ein eine Schraube aufnehmendes Befestigungsloch umfassen.

23. Hebelschalter nach einem der Ansprüche 1 bis 22, **dadurch gekennzeichnet, daß** der Betätigungsknopf (6) und/oder der Druckknopf (9) durchscheinende Symbolbereiche besitzen, die von im Innern des Betätigungsknopfes (6) angeordneten Lichtquellen beleuchtbar sind.

## Claims

1. Electric lever switch, more especially for an automotive vehicle, having an operating knob (6) disposed on the lever (7) of said switch, **characterised in that** the lever (7) is provided with securing members (8) at its one end and is pivotally connected to the operating knob (6), which accommodates all of the switching function parts (11), at its other end.

2. Lever switch according to Claim 1, **characterised in that** the operating knob (6) is mounted on the lever (7) by means of a universal joint (12).

3. Lever switch according to claim 2, **characterised in that** the movements of the operating knob (6), which is mounted in the manner of a universal joint, are converted to the movements of the switching function parts (11) in one plane.

4. Lever switch according to claim 2 or 3, **characterised in that** the operating knob (6) has a linearly displaceable push-button (9) at its end situated opposite the universal joint (12), the movement of said push-button being transmitted further to the switching function parts (11) in a linear manner.

5. Lever switch according to one of Claims 2 to 4, **characterised in that** the operating knob (6) includes an upper shell (14) and a lower shell (15), the universal joint (12) being realised by a pivot axis (18), which is disposed on the dividing seam (16) between the upper shell (14) and the lower shell (15), and by a joint axis (17) which is provided in the upper shell (14) and in the lower shell (15) perpendiculariy relative to said pivot axis.

6. Lever switch according to Claim 5, **characterised in that** the joint axis (17) and the pivot axis (18) are formed in the operating knob (6) by two half-shells (21), which form a hollow sphere, the pivot axis (18) having associated therewith at least one lever-parallel pivot groove (19), which has a stop member (25).

7. Lever switch according to claims 5 and 6, **characterised in that** the pivot axis (18) includes a spherical joint part (23), which lies in the hollow sphere, and the joint axis (17) includes journals (20), which are disposed on the spherical joint part (23) and extend into the half-shells (21) or respectively into the pivot grooves (19).

8. Lever switch according to claim 7, **characterised in that** a switching pin (29) is provided on the spherical joint part (23), which pin carries, at one end, on its locking side (30) remote from the spherical joint part (23), a spring-loaded pressure sleeve (32) which engages in an oppositely situated control slide (33), and which switching pin, at the other end between the spherical joint part (23) and the locking side (30), acts on a pivotal switching member (34) and a linear switching member (35), the switching pin (29) carrying a switching circuit board (27) which, during the pivotal movement about the joint axis (17), comes into contact with a pivotal stop (26) adjacent the operating knob.

9. Lever switch according to claim 8, **characterised in that** the pivotal switching member (34) has a rectangular pivot hole (37), which accommodates the switching pin (29) and has its maximum dimension in the direction of the dividing seam (16) between the upper shell (14) and the lower shell (15), and said hole is provided with a respective guide pin (38) on its faces facing the dividing seam (16).

10. Lever switch according to one of claims 5 to 9, **characterised in that** the operating knob (6) has, in the upper shell (14) and in the lower shell (15), on each side, a respective inclinedly extending guide groove (39), which extends from the dividing seam (16) and accommodates the guide pin (38) of the pivotal switching member (34).

11. Lever switch according to one of claims 8 to 10, **characterised in that** the pivotal switching member (34) includes at least one contact bridge (41) associated with the switching circuit board (27).

12. Lever switch according to one of claims 8 to 11, **characterised in that** the switching pin (29) has, in the direction of the dividing seam (16), at least one linear guide (42), in which a corresponding guide journal (43) of the linear switching member (35) engages in a slidable manner.

13. Lever switch according to one of claims 8 to 12, **characterised in that** the linear switching member (35) has a base plate (44), which carries the guide journal (43), a compression spring (45) being clamped between the base plate (44) and a shell wall (47) of the operating knob (6), which wall is disposed in the direction of the universal joint (12), a projection member (48) is moulded to fit on the base plate (44), which member points away from the universal joint (12) and is supported on the push-button (9) by the action of the compression spring (45), and a contact member (50), associated with the switching circuit board (27), is secured on the linear switching member (35).

14. Lever switch according to one of claims 8 to 13, **characterised in that** the switching circuit board (27) is securedly connected to the switching pin (29) via a securing bearing (36).

15. Lever switch according to one of claims 5 to 14, **characterised in that** the operating knob (6) is provided, in its dividing seam (16), with a mounting support (24) which accommodates the push-button (9) in a slidable manner.

16. Lever switch according to claim 15, **characterised in that** the mounting support (24) comprises a guide web (54), guide shells (55) and a respective pressure web (57) which is mounted in the upper shell (14) and in the lower shell (15) and has keying slides (56).

17. Lever switch according to claims 15 and 16, **characterised in that** the push-button (9) has, inside the operating knob (6), an extension member (49) which, in co-operation with the mounting support (24), defines the path of displacement of the push-button (9) outwardly, the extension member (49) having an extension groove (61), which accommodates the guide web (54), and, centrally, the switching slide (33), the orientation of which coincides with the pivotal movements of the operating knob (6).

18. Lever switch according to one of claims 8 to 17, **characterised in that** the switching slide (33) has four slide branches (62), which are orientated perpendicularly relative to one another and lie deep in the centre, said branches becoming flat outwardly, two oppositely situated slide branches (62) lying in the region of the dividing seam (16) between the upper shell (14) and the lower shell (15).

19. Lever switch according to claim 18, **characterised in that** at least one slide branch (62) has a locking web (63) in its flat region.

20. Lever switch according to one of claims 16 to 19, **characterised in that** the push-button (9) has a bore (58), which accommodates spring-loaded sliding sleeves (59), the sliding sleeves (59) co-operating with the keying slides (56) of the pressure webs (57).

21. Lever switch according to one of claims 7 to 20, **characterised in that** the lever (7) is provided with at least one intended breaking point (66) between the spherical joint part (23) and the securing members (8).

22. Lever switch according to one of claims 1 to 21, **characterised in that** the securing members (8) on the lever (7) include at least one mounting hole which accommodates a screw.

23. Lever switch according to one of claims 1 to 22, **characterised in that** the operating knob (6) and/or the push-button (9) have translucent symbol regions which are illuminatable from light sources disposed inside the operating knob (6).

## Revendications

1. Commutateur électrique à levier, en particulier pour un véhicule automobile, comportant un bouton d'actionnement (6) disposé sur son levier (7), **caractérisé en ce que** le levier (7) est pourvu à l'une de ses extrémités, d'éléments de fixation (8) et est relié de manière articulée, à son autre extrémité, au bouton d'actionnement (6) qui reçoit tous les éléments fonctionnels de commutation (11).

2. Commutateur à levier selon la revendication 1, **caractérisé en ce que** le bouton d'actionnement (6) est monté sur le levier (7) au moyen d'une articulation à croisillon (12).

3. Commutateur à levier selon la revendication 2, **caractérisé en ce que** les mouvements du bouton d'actionnement (6), monté par une articulation à croisillon, sont convertis en mouvements des éléments fonctionnels de commutation (11) dans un plan.

4. Commutateur à levier selon la revendication 2 ou 3, **caractérisé en ce que** le bouton d'actionnement (6) comporte, à son extrémité opposée à l'articulation à croisillon (12), un bouton-poussoir (9) déplaçable linéairement dont le mouvement est transmis linéairement aux éléments fonctionnels de commutation (11).

5. Commutateur à levier selon l'une des revendications 2 à 4, **caractérisé en ce que** le bouton d'actionnement (6) comprend une coquille supérieure (14) et une coquille inférieure (15), l'articulation à croisillon (12) étant réalisée par un axe de pivotement (18), disposé sur le joint de séparation (16) entre la coquille supérieure (14) et la coquille inférieure (15), et par un axe d'articulation (17), perpendiculaire à l'axe de pivotement, encastré dans la coquille supérieure (14) et la coquille inférieure (15).

6. Commutateur à levier selon la revendication 5, **caractérisé en ce que** l'axe d'articulation (17) et l'axe de pivotement (18) sont formés dans le bouton d'actionnement (6), par deux demi-coquilles (21) qui forment une sphère creuse, l'axe de pivotement (18) étant associé à au moins une rainure de pivotement (19) parallèle au levier, qui comporte une butée (25).

7. Commutateur à levier selon les revendications 5 et 6, **caractérisé en ce que** l'axe de pivotement (18) comprend une bille d'articulation (23) se trouvant dans la sphère creuse, et l'axe d'articulation (17) comprend des tourillons (20) qui sont disposés sur la bille d'articulation (23) et qui pénètrent dans les demi-coques (21), respectivement dans les rainures de pivotement (19).

8. Commutateur à levier selon la revendication 7, **caractérisé en ce que** sur la bille d'articulation (23) est prévu un tenon de commutation (29) qui porte d'une part, sur son côté d'accrochage (30) tourné à l'opposé de la bille d'articulation (23), une douille de pression (32) chargée par un ressort, qui s'engage dans une coulisse de commutation (33) opposée et qui sollicite d'autre part, entre la bille d'articulation (23) et le côté d'accrochage (30), un organe de commutation pivotant (34) et un organe de commutation linéaire (35), le tenon de commutation (29) portant une platine de commutation (27) qui, pendant le pivotement autour de l'axe d'articulation (17), vient en contact avec une butée de pivotement (26) du côté du bouton d'actionnement.

9. Commutateur à levier selon la revendication 8, **caractérisé en ce que** l'organe de commutation pivotant (34) présente un trou de pivotement (37) rectangulaire, recevant le tenon de commutation (29), qui présente sa plus grande étendue dans la direction du joint de séparation (16) entre la coquille supérieure (14) et la coquille inférieure (15) et qui est pourvu d'un doigt de guidage (38) sur chacune de ses surfaces tournées vers le joint de séparation (16).

10. Commutateur à levier selon l'une des revendications 5 à 9, **caractérisé en ce que** dans la coquille supérieure (14) et la coquille inférieure (15), le bouton d'actionnement (6) comporte, sur chacun des côtés, une rainure de guidage (39) partant du joint de séparation (16), s'étendant obliquement et recevant le doigt de guidage (38) de l'organe de commutation pivotant (34).

11. Commutateur à levier selon l'une des revendications 8 à 10, **caractérisé en ce que** l'organe de commutation pivotant (34) comprend au moins un pont de contact (41) associé à la platine de commutation (27).

12. Commutateur à levier selon l'une des revendications 8 à 11, **caractérisé en ce que** le tenon de commutation (29) présente, en direction du joint de séparation (16), au moins un guide linéaire (42) dans lequel s'engage de manière mobile à coulissement un tenon de guidage (43) correspondant de l'organe de commutation linéaire (35).

13. Commutateur à levier selon l'une des revendications 8 à 12, **caractérisé en ce que** l'organe de commutation linéaire (35) comporte une plaque de base (44) portant le tenon de guidage (43), un ressort de compression (45) étant serré entre la plaque de base (44) et une paroi de coquille (47) disposée dans la direction de l'articulation à croisillon (12) du bouton d'actionnement (6), la plaque de base (44) venant de moulage avec un prolongement (48) qui s'éloigne de l'articulation à croisillon (12) et prend appui contre le bouton-poussoir (9) sous l'action du ressort de compression (45), un organe de contact (50) associé à la platine de commutation (27) étant fixé à l'organe de commutation linéaire (35).

14. Commutateur à levier selon l'une des revendications 8 à 13, **caractérisé en ce que** la platine de commutation (27) est reliée fixement au tenon de commutation (29) par un palier de fixation (36).

15. Commutateur à levier selon l'une des revendications 5 à 14, **caractérisé en ce que** le bouton d'actionnement (6) est pourvu, dans son joint de séparation (16), d'un support (24) recevant de façon coulissante le bouton-poussoir (9).

16. Commutateur à levier selon la revendication 15, **caractérisé en ce que** le support (24) est constitué d'une entretoise de guidage (54), de coquilles de guidage (55) et d'une entretoise de compression (57) montée respectivement dans la coquille supérieure (14) et la coquille inférieure (15) et comportant des coulisses de palpage (56).

17. Commutateur à levier selon les revendications 15 et 16, **caractérisé en ce que** le bouton-poussoir (9) possède, à l'intérieur du bouton d'actionnement (6), un appendice (49) qui, en coopération avec le support (24), limite vers l'extérieur la course de coulissement du bouton-poussoir (9), l'appendice (49) comportant une rainure d'appendice (61) recevant l'entretoise de guidage (54) et, au centre, la coulisse de commutation (33), dont l'orientation coïncide avec les mouvements de pivotement du bouton d'actionnement (6).

18. Commutateur à levier selon l'une des revendications 8 à 17, **caractérisé en ce que** la coulisse de commutation (33) comporte quatre branches de coulisse (62) orientées perpendiculairement l'une par rapport à l'autre, situées en profondeur au centre et s'aplatissant vers l'extérieur, deux branches de coulisse (62) opposées se situant dans la zone du joint de séparation (16) entre la coquille supérieure (14) et la coquille inférieure (15).

19. Commutateur à levier selon la revendication 18, **caractérisé en ce qu'**au moins une branche de coulisse (62) possède une nervure d'encliquetage (63) dans sa zone plate.

20. Commutateur à levier selon l'une des revendications 16 à 19, **caractérisé en ce que** le bouton-poussoir (9) comporte un perçage (58) recevant des douilles coulissantes (59) soumises à l'action d'un ressort, les douilles coulissantes (59) coopérant avec les coulisses de palpage (56) des entretoises de compression (57).

21. Commutateur à levier selon l'une des revendications 7 à 20, **caractérisé en ce que** le levier (7) est pourvu d'au moins un point destiné à la rupture (66), entre la bille d'articulation (23) et les éléments de fixation (8).

22. Commutateur à levier selon l'une des revendications 1 à 21, **caractérisé en ce que** les éléments de fixation (8) sur le levier (7) comprennent au moins un trou de fixation recevant une vis.

23. Commutateur à levier selon l'une des revendications 1 à 22, **caractérisé en ce que** le bouton d'actionnement (6) et/ou le bouton-poussoir (9) comprennent des zones à symboles transparentes, qui peuvent être éclairées par des sources lumineuses disposées à l'intérieur du bouton d'actionnement (6).
